# EUROPEAN PATENT SPECIFICATION

(11) **EP 1 130 883 B1**
(45) Date of publication and mention of the grant of the patent: **25.01.2006**
(21) Application number: 01104738.8
(22) Date of filing: 26.02.2001
(51) Int. Cl.: H04M 1/247, H04M 1/725

(54) **Portable telephone with URL accessing function**
Tragbares Telefon mit URL-Zugriffsfunktion
Téléphone portable avec fonction d'accès URL

(30) Priority: 29.02.2000 JP 2000054915; 29.02.2000 JP 2000054916; 29.02.2000 JP 2000054917; 29.02.2000 JP 2000054921
(43) Date of publication of application: 05.09.2001
(60) Divisional application: 04023831.3
(73) Proprietor: MATSUSHITA ELECTRIC INDUSTRIAL CO., LTD., Kadoma-shi, Osaka (JP)
(72) Inventor: Ishigaki, Junji, Hachioji-shi, Tokyo 192-0032 (JP)
(74) Representative: Grünecker, Kinkeldey, Stockmair & Schwanhäusser Anwaltssozietät

(56) References cited:
- WO-A-00/49731
- WO-A-99/22488
- WO-A-99/52032
- DE-A- 19 856 357
- GB-A- 2 023 966
- GB-A- 2 322 511
- US-A- 5 812 776
- US-A- 5 854 630
- US-A- 5 895 471
- US-A- 5 991 773
- PATENT ABSTRACTS OF JAPAN vol. 1999, no. 12, 29 October 1999 (1999-10-29) & JP 11 184670 A (NEC CORP), 9 July 1999 (1999-07-09)
- DOMEL P: "WebMap: a graphical hypertext navigation tool" , COMPUTER NETWORKS AND ISDN SYSTEMS, NORTH HOLLAND PUBLISHING. AMSTERDAM, NL, VOL. 28, NR. 1, PAGE(S) 85-97 XP004001214 ISSN: 0169-7552 * the whole document *

## Description

The present invention relates to a calling method of URL capable of calling the URL displayed on a terminal screen lastly at the previous time in a simple key operation.

The non-voice information communication mode means an operation mode of the online data service making use of a digital portable telephone, in which a site (program) access service registered at the center, an Internet access service, a message service, and electronic mail (e.g., i-modemail) are available.

Conventionally, the portable telephone having a non-voice information communication mode (e.g., i-mode) function has a browser (information access software), thereby making an access to a home page in the Internet at the URL (Uniform Resource Locator) to acquire the intended information.

Conventionally, there were two methods of making access to the URL in the portable telephone having the non-voice information communication mode (e.g., i-mode): one including calling a non-voice information communication mode screen, (e.g., an i-mode main screen), selecting the "Internet", determining the selection by a determination key of the navigation key, and then entering the URL; and the other including calling an i-mode main screen, selecting the "Bookmark", determining the selection by a determination key of the navigation key, and then calling the URL registered in the "Bookmark".

However, with the conventional methods of making an access to the URL, it is required to input the URL every time or call the URL registered in the "Bookmark", even if the URL is displayed on the terminal screen lastly at the previous time. Therefore, these methods had the problem of being not user friendly.

A cellular phone which has a single man-machine interface (MMI) for controlling a telephone and a browser mode is described in WO-A 99/52032. For controlling the telephone mode and browser mode, the MMI is based on the World Wide Web (WWW) programming language HTML for displaying pages accessed by a URL. The URLs either refer to User Interface Pages stored in a local memory of the wireless communication device or to pages of the WWW. For controlling the wireless communication device, each control function is defined in user interface page written in the mark up language (HTML) and stored in the local memory. A key pad enables to access defined functions of a communication device and to display the content of the accessed page on a screen display.

It is the object of the invention to provide a calling method of URL in a portable telephone capable of calling the URL displayed on a terminal screen lastly at the previous time in a simple key operation, and the portable telephone employing the calling method.

This is achieved by the features of the independent claims.

In particular the invention is a calling method of URL in a portable telephone capable of gaining access to the URL information through a browser, wherein the portable telephone is able to call the URL which has been displayed on a terminal screen lastly at the previous time by pressing a browser function key and then one specific key, while the portable telephone is waiting. With this constitution, the URL displayed on the terminal screen lastly at the previous time can be called in a simple operation.

Preferably the invention is the calling method of URL in the portable telephone, wherein the browser function key is a warp key for warping the portable telephone to a non-voice information communication mode. With this constitution, the URL displayed on the terminal screen lastly at the previous time can be called in a simple operation.

Preferably the invention is the calling method of URL in the portable telephone, wherein the specific key is a ten-key "0". With this constitution, the URL displayed on the terminal screen lastly at the previous time can be called in a simple operation.
Fig. 1 is a front view illustrating the configuration of a portable telephone according to the present invention.
Fig. 2 is a circuit block diagram of a circuit for embodying the portable telephone of Fig. 1.
Fig. 3 is a view illustrating an example of an icon screen which is displayed in a waiting state on a display of the portable telephone of Fig. 1.
Fig. 4 is a transition view for explaining the operation of the portable telephone according to the embodiment of the invention.
Fig. 5 is a transition view for explaining an operation of i-warp registering the URL to the portable telephone according to the embodiment of the invention.
Fig. 6 is a flowchart for explaining an operation of calling the URL displayed on the terminal screen lastly at the previous time among the i-warp registered URLs according to the embodiment of the invention.

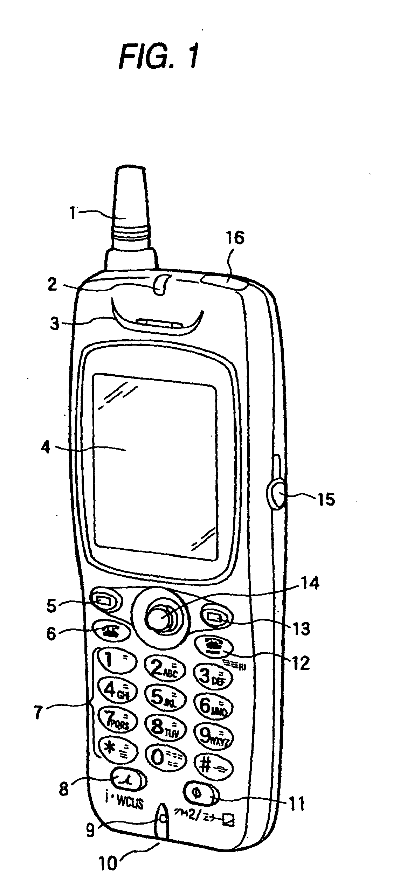

The preferred embodiments of the present invention will be described below with reference to Figs. 1 to 6.

Fig. 1 is a schematic view illustrating the structure of a portable telephone having a non-voice information communication mode (e. g., i-mode) function according to the present invention. In Fig. 1, the portable telephone according to the invention comprises an antenna 1, an incoming/charge lamp 2, a telephone receiver 3, a liquid crystal display 4, a left soft key 5 serving as a telephone directory button, a call start button 6, a ten-key or dial key 7, a warp key (jump key) 8 for accessing a registered URL, a transmitter 9, an external connection terminal 10, a voice/manner key 11, a power source/end/answer holding key 12, a right soft key 13 serving as a redial/clear button, a navigation key 14 having a scroll function to scroll the display in an upper, lower, right or left direction, and determining the scrolled display by pressing a central button, an earphone/microphone terminal 15, and an infrared port 16.

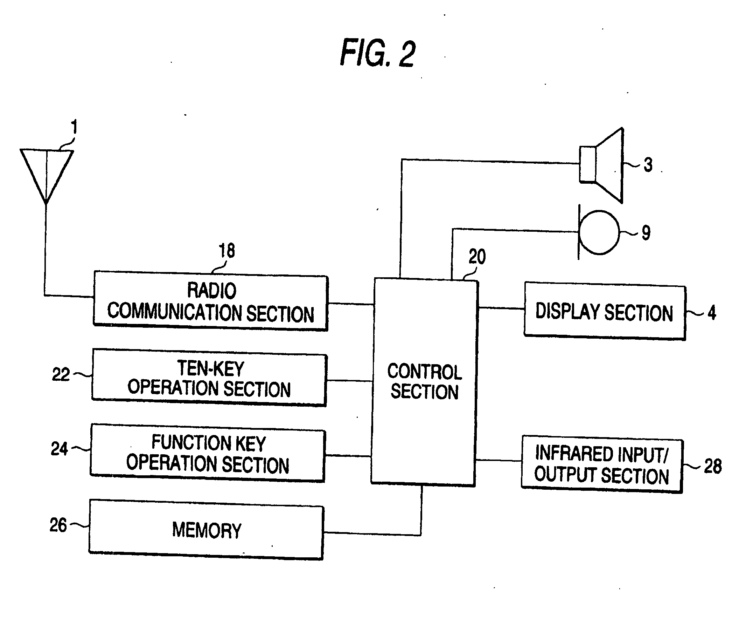

Fig. 2 is a circuit block diagram for realizing the portable telephone with the above constitution. In Fig. 2, the portable telephone receives a radio wave at the antenna 1 through a receiving part of a radio communication section 18 and then the received information is transmitted to a control section 20. The control section 20 displays the received information such as a telephone number on the liquid crystal display 4. Also, the control section 20 converts the received information into voice information, and outputs it in voice from the speaker (telephone receiver) 3 of the telephone receiving section. The transmitter (microphone) 9 accepts the voice of the user and passes it to the control section 20, wireless transmitting the voice through a transmitting part (not shown) of the radio communication section 18 and the antenna 1 to a called party.

The control section 20 controls the voice information such as speech content to be memorized during the call, or the memorized information to be read in the memory 26. A ten-key operation section 22 enters a dial signal into the control section 20 by an operation of the ten-key 7, and a function key operation section 24 for other than the ten-key enters an operation of a function key, for example, the navigation key 14 into the control section 20. Also, an infrared input/output section 28 inputs or outputs an infrared signal via the infrared port 16. The circuit block is accommodated with a housing of Fig. 1.

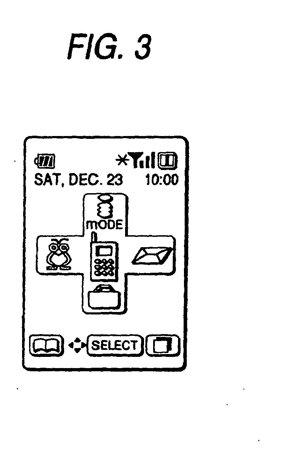

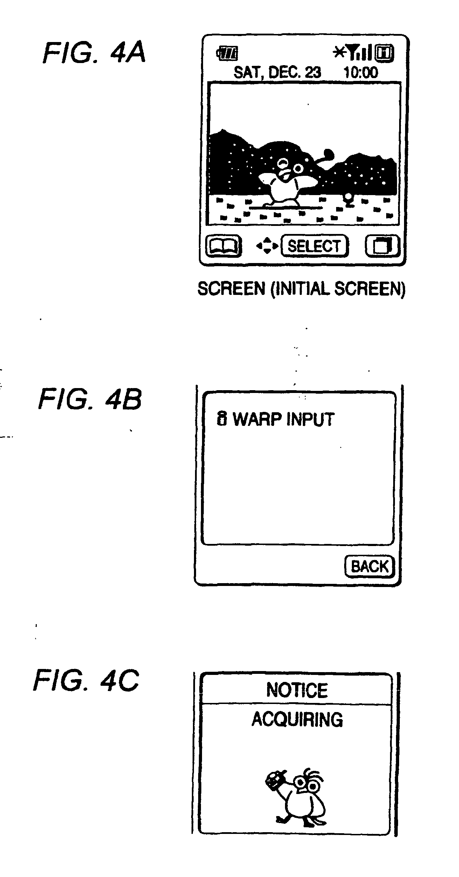

Fig. 3 illustrates an example of an icon screen which is displayed in an waiting state on the display of the portable telephone with the above constitution. In this example, the icon screen with a cross shape appears, wherein an i-mode main icon, an i-mode mail icon, a telephone icon, a screen icon, and a menu icon in the center are displayed clockwise from the upside, a selected icon screen being displayed in enlargement to clarify which icon screen is selected at present. embodiment of the invention. In the portable telephone of this embodiment, the portable telephone is placed in a waiting state by operating the power key 12. Then, since a screen indicating the waiting state appears, as shown in Fig. 4A, the browser function key (warp key) 8 is operated, and a little later, the voice key 11 is operated to enable the portable telephone to make transition to an i-warp callable screen, as shown in Fig. 4B.

After the beep sound is heard, a screen indicating the i-warp voice calling ready appears, as shown in Fig. 4C. Then, the voice calling of URL is practiced. In this case, the "i-warp name" which is the URL name or the name which the user actually speaks in registering the i-warp name with the voice (as will be described later) is attached, whereby the i-warp registered URL can be called only by entering the "i-warp name" with the voice. Herein, supposing that the "i-warp name" is registered with the voice as a name "expressway", if the "expressway" is entered in voice, a screen with the "title" and "URL" is displayed as shown in Fig. 4D.

In the screen display of Fig. 4D, the "title" or "URL" is referenced to confirm whether or not the intended i-warp has been called with the voice. If the registered i-warp is confirmed, the access to an intended URL is effected about two seconds after the screen with the "title" and "URL" is displayed as shown in Fig. 4D. Consequently, a screen is displayed as shown in Fig. 4E.

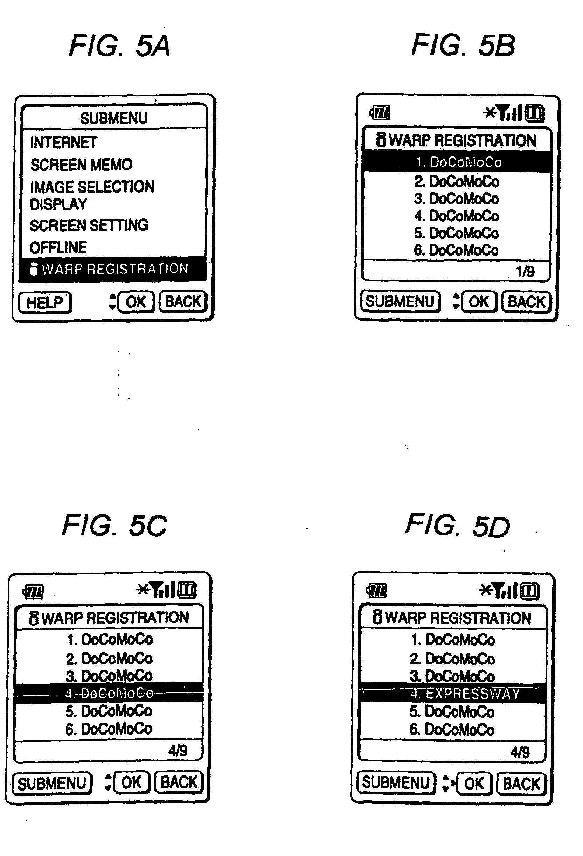

Fig. 5 is a transition diagram for explaining a procedure for registering the URL to an i-warp name with the voice. In a waiting state, a "List of i-warp registered names" as shown in Fig. 5A. appears by operating the determination key of the navigation key 14, ten-key "4", and then ten-key "4", to display the current contents of i-warp registered names.

Since the made-up names are registered at registration numbers 1 to 9 in an initial state, the registration number which the user wants to register, for example #4, is selected as shown in Fig. 5B. Then, the URL title is entered in characters such as "Expressway conditions in Tokyo area" corresponding to this registration number #4, and further the name spoken in voice calling or the "i-warp name" is entered in characters. Herein, since the "i-warp name" is "expressway" as shown in Fig. 5C, the characters "expressway" are entered. If this entry is correct, the determination key of the navigation key 14 is pressed to determine the i-warp name. Then, a screen as shown in Fig. 5E is displayed to notify that the registration of the i-warp name is completed. The registered i-warp name and title are saved in a table format in the memory 26.

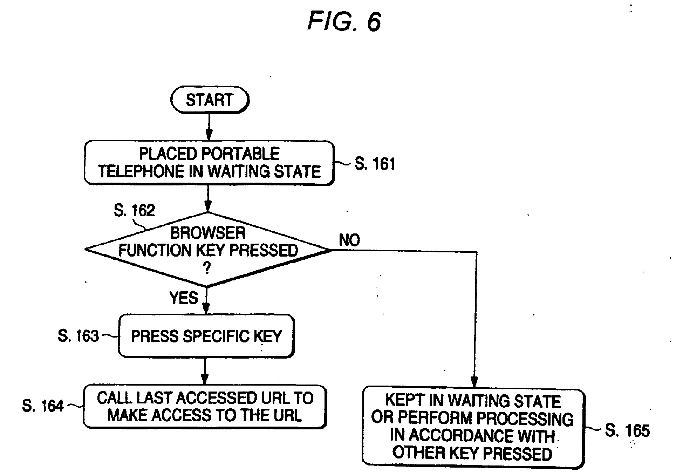

Fig. 6 is a flowchart for explaining the voice calling of i-warp registered URL. In Fig. 6, to make the voice calling of i-warp registered URL, the portable telephone is first placed in a waiting state by manipulating the power key 12 (step 61).

The embodiment of the present invention will be described below. According to the second embodiment, the control section 20, shown in Fig. 2, controls the latest URL accessed to be stored in the memory 26, when the URL information is accessed through the browser. And after the access of URL information is ended, the URL is still stored so that the URL displayed on the terminal screen lastly at the previous time can be recalled.

Figs. 4 and 5 illustrate the transition of the display screen in the portable telephone for explaining the embodiment of the invention. In the portable telephone of this embodiment, the portable telephone is placed in a waiting state by operating the power key 12. Then, a screen indicating the waiting state appears, as shown in Fig. 4A.

A procedure for i-warp registering the URL to enable the URL access will be described below. Fig. 5 is a transition view for explaining the procedure for i-warp registering the URL. In an icon screen as shown in Fig. 3, an "i-mode main" icon is called. Further, an "i-mode main" screen is selected, and then an "i-Menu" (not shown) is selected, whereby a "submenu screen" as shown in Fig. 5A can be displayed by operating the left soft key 5. If the user selects an "i-warp registration" using a scroll key, the "i-warp registration" which is a selected item is displayed in reverse.

In this way, the current content of the "i-warp registration" is displayed in reverse as shown in Fig. 5B. Since the aerial names are registered at registration numbers #1 to #9 in an initial state, the registration number which the user wants to register, for example #4, is selected as shown in Fig. 5C by entering the registration number by means of the ten-key, or scrolling with the navigation key 14. Then, the URL title is entered in characters such as "Expressway conditions in Tokyo area" corresponding to this registration number #4, and further the URL is successively entered in characters. In this way, the title and URL are registered at the registration number #4 as shown in Fig. 5D.

Since the title of Fig. 5D is too long, a part of the title has been cut. To see the long title fully, a right scroll key of the navigation key 14 may be operated to read the entire tile. And the determination key of the navigation key 14 is pressed to determine the i-warp registration at the registration number #4.

By operating the browser function key (warp key) 8 while the portable telephone is waiting state, an i-warp input screen appears as shown in Fig. 4B. Herein, if the user enters a ten-key "0" as the specific key, the URL (Uniform Resource Locator) displayed on the terminal screen lastly at the previous time is displayed and the access to the URL is made.

Fig. 6 is a flowchart for explaining an operation of calling the URL displayed in the terminal screen lastly at the previous time among the i-warp registered URLs.

Before starting the operation of Fig. 6, the portable telephone is first placed in the waiting state by operating the power key 12 (step 161). Thereafter, it is detected whether or not the browser function key (warp key) 8 is pressed (step 162). If the browser function key (warp key) 8 has been pressed, the ten-key "0" as the specific key is pressed (step 163).

If this specific key is pressed, the URL displayed on the terminal screen lastly at the previous time is called and the access to this URL is made (step 164) . If it is not detected that the browser function key (warp key) 8 is pressed at step 162, the portable telephone is kept in the waiting state, or performs the processing in accordance with an instruction of other key pressed.

In the above explanation, the ten-key "0" is employed as the specific key to call the URL displayed on the terminal screen lastly at the previous time. However, any other key may be employed as the specific key.

## Claims

1. A calling method of an URL for a portable telephone capable of accessing to the URL through a browser, comprising steps of:
pressing a browser function key (8) during the portable telephone in a waiting state;
**characterized in that**
pressing (S. 163) a specific key (7) to access the URL in the Internet which has been accessed lastly at the previous time.

2. A calling method of an URL in the portable telephone according to claim 1, wherein the browser function key (8) is a warp key for accessing a non-voice information communication mode.

3. A calling method of an URL in the portable telephone according to claim 1, wherein said specific key (7) is a ten-key "0".

4. A portable telephone capable of accessing to an URL through a browser, comprising:
a display section (4);
a radio communication section (18);
a function key operation section (24) activating a browser function;
a ten-key operation section (22);
a memory (26) registering an URL previously accessed and a name specifying to said URL therein; and
a control section (20) recognizing that the function key section (24) and the ten-key operation section (22) are operated, reading out an URL and a name registered in the memory (26), and controlling said display section (4) and the radio communication section (18);
**characterized in that**
said ten-key operation section (22) including a specific key (7) for calling an URL while the browser function is active , and
said control section reads out an URL accessed at a previous time and a name specifying to said URL from the memory (26), controls the display section (4) to display the name on a terminal screen, and controls the radio communication section (18) to automatically access to said URL if said control section (20) recognizes that the specific key is pressed down while the browser function is active.

## Patentansprüche

1. Verfahren zum Aufrufen einer URL für ein tragbares Telefon, das in der Lage ist, über einen Browser auf die URL zuzugreifen, wobei es die folgenden Schritte umfasst:
Drücken einer Browser-Funktionstaste (8), wenn sich das tragbare Telefon in einem Wartezustand befindet;
**gekennzeichnet durch:**
Drücken (S 163) einer bestimmten Taste (7), um auf die URL in dem Internet zuzugreifen, auf die zuvor zuletzt zugegriffen wurde.

2. Verfahren zum Aufrufen einer URL in dem tragbaren Telefon nach Anspruch 1, wobei die Browser-Funktionstaste (8) eine gewölbte Taste zum Zugreifen auf einen Kommunikationsmodus für Nicht-Sprach-Informationen ist.

3. Verfahren zum Aufrufen einer URL in dem tragbaren Telefon nach Anspruch 1, wobei die bestimmte Taste (7) eine "0" der Zehnertastatur ist.

4. Tragbares Telefon, das in der Lage ist, über einen Browser auf eine URL zuzugreifen, und das umfasst:
einen Anzeigeabschnitt (4);
einen Funkkommunikationsabschnitt (18);
einen Funktionstasten-Betätigungsabschnitt (24), der eine Browser-Funktion aktiviert;
einen Zehnertastatur-Betätigungsabschnitt (22);
einen Speicher (26), der eine URL, auf die zuvor zugegriffen wurde, und einen Namen speichert, der die URL angibt; und
einen Steuerabschnitt (20), der erkennt, dass der Funktionstastenabschnitt (24) und der Zehnertastatur-Betätigungsabschnitt (22) betätigt werden, eine URL und einen Namen ausliest, die in dem Speicher (26) registriert sind, und den Anzeigeabschnitt (4) sowie den Funkkommunikationsabschnitt (18) steuert;
**dadurch gekennzeichnet**,
der Zehnertastatur-Betätigungsabschnitt (22) eine bestimmte Taste (7) zum Aufrufen einer URL enthält, wenn die Browser-Funktion aktiv ist, und
der Steuerabschnitt eine URL, auf die zuvor zugegriffen wurde, und einen Namen, der die URL angibt, aus dem Speicher (26) ausliest, den Anzeigeabschnitt (4) so steuert, dass er den Namen auf einem Endgerät-Bildschirm anzeigt, und den Funkkommunikationsabschnitt (18) so steuert, dass er automatisch auf die URL zugreift, wenn der Steuerabschnitt (20) erkennt, dass die bestimmte Taste gedrückt wird, und gleichzeitig die Browser-Funktion aktiv ist.

## Revendications

1. Procédé d'appel d'une adresse URL pour un téléphone portable capable d'accéder à l'adresse URL au moyen d'un navigateur, comprenant les étapes consistant à :
appuyer sur une touche (8) de fonction navigateur alors que le téléphone portable est en position d'attente ;
**caractérisé par**
appuyer (*S*. 163) sur une touche spécifique (7) pour accéder à la dernière adresse URL sur Internet à laquelle il a été accédé antérieurement.

2. Procédé d'appel d'une adresse Internet dans le téléphone portable selon la revendication 1, dans lequel la touche (8) de la fonction navigateur est une touche de fonction destinée à accéder à un mode de communication d'information non vocale.

3. Procédé d'appel d'une adresse URL dans le téléphone portable selon la revendication 1, dans lequel ladite touche spécifique (7) est une touche "0" de clavier numérique.

4. Téléphone portable capable d'accéder à une adresse URL au moyen d'un navigateur, comprenant :
une section d'affichage (4) ;
une section de radiocommunication (18) ;
une section (24) de mise en oeuvre de clé de fonction activant une fonction navigateur ;
une section (22) de mise en oeuvre de clavier numérique ;
une mémoire (26) enregistrant une adresse URL à laquelle il a été accédé antérieurement et un nom spécifique de ladite adresse URL ; et
une section de commande (20) reconnaissant que la section (24) de clés de fonction et la section (22) de mise en oeuvre de clavier numérique sont en fonctionnement, lisant une adresse URL et un nom enregistrés dans la mémoire (26) et commandant ladite section d'affichage (4) et ladite section de radiocommunication (18) ;
**caractérisé en ce que**
ladite section (22) de mise en oeuvre de clavier numérique comprenant une touche spécifique (7) destinée à appeler une adresse URL quand la fonction navigateur est activée, et
ladite section de commande lit une adresse URL à laquelle il a été accédé antérieurement et un nom spécifique de ladite adresse URL dans la mémoire (26), commande à la section d'affichage (4) d'afficher le nom sur l'écran de terminal, et commande à la section de radiocommunication (18) d'accéder automatiquement à ladite adresse URL si ladite section de commande (20) reconnaît qu'il est appuyé sur la touche spécifique alors que la fonction navigateur est activée.
